# EUROPEAN PATENT APPLICATION

(11) **EP 1 746 508 A2**
(43) Date of publication of application: **24.01.2007**
(21) Application number: 06253511.7
(22) Date of filing: 05.07.2006
(51) Int. Cl.: G06F 11/273

(54) **Support automation**

(30) Priority: 19.07.2005 US 184253
(71) Applicant: Hewlett-Packard Development Company, L.P., Houston, TX 77070 (US)
(72) Inventor: Flocken, Phil A., Fort Collins, CO 80528 (US); Brothers, William, Roseville, CA 95747 (US); Faihe, Yassine, 38053 Grenoble Cedex 9 (FR)
(74) Representative: Jackson, Richard Eric

(57) **Abstract**

An embodiment of a framework for servicing a client computer (24) has a coordination engine (152) and a data retrieval service (105) for receiving a diagnostic data set (28) from a client computer (24), an analysis service (112) for analyzing (5206, 5236) said diagnostic data set (28) and for generating (5210, 5240) a recommendation (50) using the results of said analyzing. Functional modules may be executable by the services. The modules include a plurality of analysis modules (46, 112) for analyzing the diagnostic data set (28). The coordination engine (152) is arranged to receive data from the functional modules, select modules on the basis of the diagnostic data set (28), and pass the data to the selected modules.

## Description

### BACKGROUND

Modern computer hardware and software are highly complex, and faults are not uncommon. Many vendors encourage end-users to send reports of errors to the vendor, both for the vendor's information and to enable the vendor to recommend to the user measures that may solve, mitigate, or avoid the problem in question. Many computer systems are arranged to generate automatically an error report, or a report of the state of the computer at the time when the error is detected, and to send such a report to the vendor either automatically or with only minimal intervention by the user. In order to provide a quick response, at least to comparatively straight-forward errors, a computerized diagnostic system operated by the vendor that receives the report from the user's computer may automatically carry out a standard review of the data in the report, and may generate a recommendation for the user in appropriate cases.

However, previously proposed diagnostic systems have typically carried out a standard review on all incoming user reports, using a largely hard-coded procedure. That procedure in some cases results in the diagnostic system running analyses that are clearly inapplicable to a particular report, which is inefficient even if the inapplicable analysis is validated and skipped as soon as it starts. In addition, the need to sequence the analyses correctly, especially if one analysis is dependent on the result of another analysis, may render that procedure somewhat inflexible.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a schematic view of a system according to an embodiment of the invention.

FIG. 2 is a block diagram of a framework according to an embodiment of the invention.

FIGS. 3A and 3B are a chart of a layer structure of the framework the block diagram of which is shown in FIG. 2.

FIG. 4 is a flowchart of a first embodiment of a method according to an embodiment of the invention.

FIG. 5 is a flowchart of a second embodiment of a method according to an embodiment of the invention.

### DETAILED DESCRIPTION

Reference will now be made in detail to embodiments of the present invention, examples of which are illustrated in the accompanying drawings.

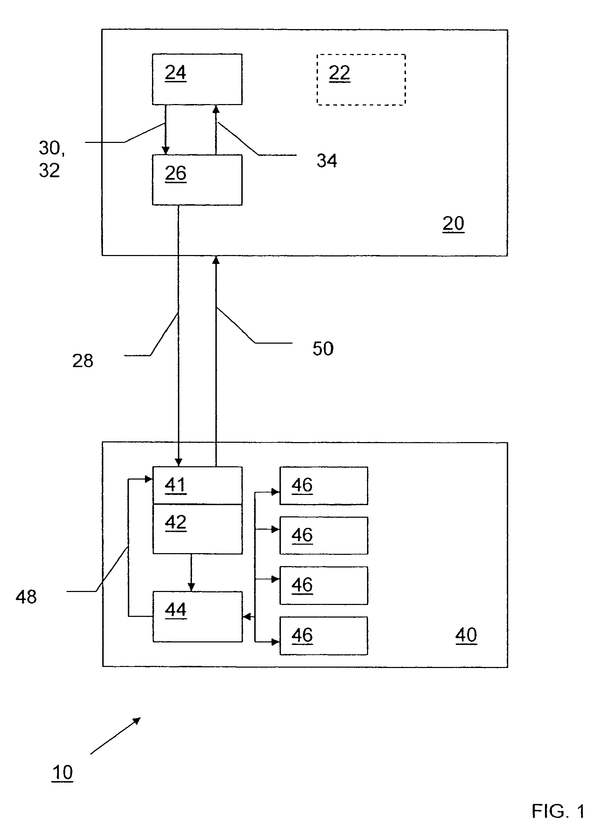

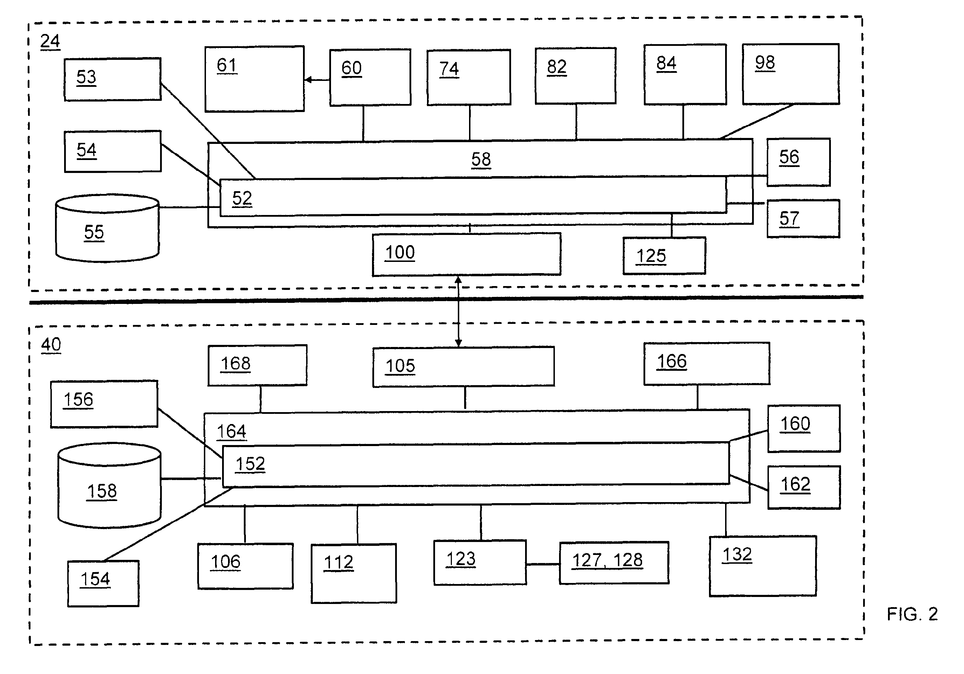

Referring initially to Figure 1, a system embodiment of the present invention, indicated generally by the reference number 10, comprises at least one client site 20 comprising client personnel 22 operating a computer system 24. The computer system 24 is provided with diagnostic software 26 that prepares a diagnostic data set 28 in response to a trigger 30. The trigger 30 may be generated by personnel 22, or by the computer system 24. For example, certain errors in an application program 61 (see FIG. 2) may be readily detected by an operating system, which can generate a trigger 30, and so on. The trigger 30 may be generated in response to an error, or may be generated to initiate a routine review of a computer system 24 that is apparently operating normally.

The diagnostic software 26 may passively receive data 32 from other parts of the computer system 24 or, if the part of the computer system 24 affected by error is still at least partly operational, the diagnostic software 26 may send requests 34 for specific further data.

The diagnostic software 26 is in communication with a vendor's system 40. The link between the client system 24 and the vendor system 40 may be, for example, an internet link to a vendor website 41, as described in commonly-assigned U.S. Patent Application No. 2004/0249914 (Flocken et al.), which is incorporated herein by reference in its entirety.

At the vendor system 40, error reports comprising diagnostic data sets 28 are received by a validation unit 42. The validation unit 42 may determine whether an incoming message is in fact a valid error report from a computer system 24 that the vendor system 40 supports, and may also determine whether the specific client computer system 24 is eligible for support from the vendor system 40. If the client system 20 is not eligible for support, the vendor may wish to analyze error reports for the vendor's own information, or may not consider analyzing such reports to be worth-while. Alternatively, the vendor may consider the risk of spurious error reports to be sufficiently high that it is prudent to discard all messages not emanating from client sites 20 eligible for support.

From the validation unit 42, the validated diagnostic data set 28 passes to a coordination unit 44. In an embodiment, the coordination unit 44 maintains a registry of a plurality of analysis modules or analysis agents 46. Each analysis module 46 is arranged to carry out a specific part of the analysis procedure that is required by a diagnostic data set 28. Some analysis modules 46 may analyze every diagnostic data set 28. Some analysis modules 46 may analyze only diagnostic data sets 28 having specific characteristics. For example, the client computer system 24 may monitor different applications 61 simultaneously, and some analysis may be specific to a particular application whereas other analysis may be more generalized and applicable to multiple software products; therefore, each analysis agent or module 46 subscribes to a type of fault data that is appropriate for the module 46 in question to analyze. Some analysis modules 46 may require the output from other analysis modules 46 before they start, for example, because a later analysis module 46 uses an output from an earlier analysis module 46 as part of the data that the later analysis module 46 analyzes. Some analysis modules 46 may require a specific output from an earlier analysis module 46 as part of the criteria to determine whether the later analysis module 46 will analyze the specific data set at all. Other analysis modules 46 that are not interdependent may analyze the data set 28 in parallel.

Once all of the analysis modules 46 have completed their processing of the data set 28, an analysis report 48 is generated. The analysis report 48 may be sent to the vendor website 41, and a message 50 may be sent to the client site 20 instructing the client personnel 22 or the client computer system 24 how to access the report. As described in the above-mentioned U.S. Patent Application No. 2004/0249914 of Flocken et al., the analysis report 48 may include recommendations to personnel 22, patches to software in client system 24, or other measures to correct or prevent the future occurrence of an error or otherwise to improve the operation of the client system 24.

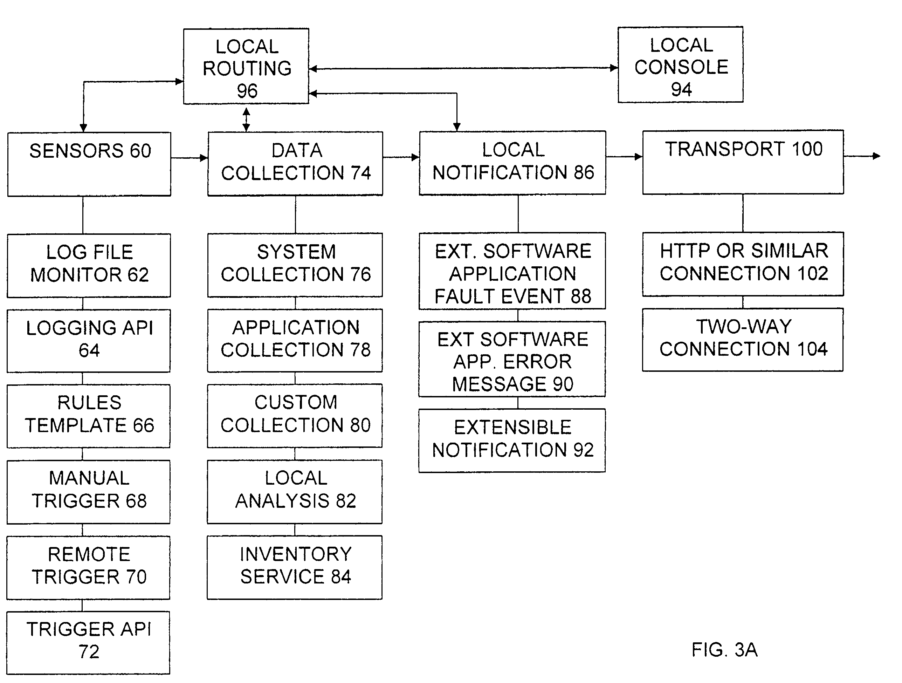

Referring now to FIG. 2, in a support automation framework embodiment the client system 24 includes a client services coordination engine 52, which is in communication with associated infrastructure components such as a web user interface 53, a set of configuration files and policy settings 54, a local cache 55, a context map 56, and a subscription registry 57. The client services coordination engine 52 communicates with attached services through a service oriented interface layer, which in an embodiment is a web services interface 58. As shown in FIG. 2, the services attached to the client services coordination engine 52 comprise a fault detection service or sensor layer 60 that monitors installed software applications 61, a data collection service or data collection layer 74, a local analysis service 82, an inventory service 84, an incident lifecycle service 98, a transport layer or transport service 100, and a change and configuration agent 125. The services 60, 74, 82, 84, 98, 100, and 125 are described in more detail below with reference to FIG. 3A.

The customer site 20 is connected to the vendor system 40 by the transport layer or transport service 100 on the local computer system 24 communicating with a data retrieval service 105 on the vendor system 40.

The vendor system 40 comprises a server services coordination engine 152, which is in communication with associated infrastructure components such as a web user interface 154, a set of configuration files and policy settings 156, a data store 158, a context map 160, and a subscription registry 162. The server services coordination engine 152 communicates with attached service modules through a service oriented interface layer, which in an embodiment is a web services interface 164.

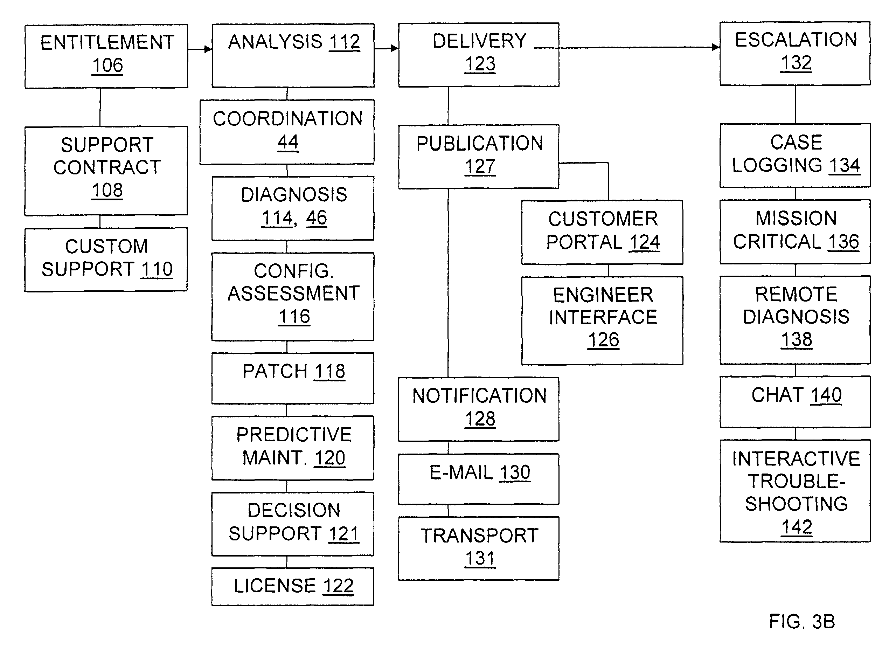

As shown in FIG. 2, the services attached to the server services coordination engine 152 comprise an entitlement service 106, an analysis layer or analysis service 112, a delivery service 123, which may comprise a publication layer or publication service 127 and a notification layer or notification service 128, an escalation service or escalation layer 132, An incident lifecycle service 166, and a reporting service 168. The services 105, 106, 112, 123, 128, 132, 166, and 168 are described in more detail below with reference to FIG. 3B.

Referring now to FIG. 3A, in the client system 24 the fault detection service or sensor layer 60 monitors installed software applications 61 to generate the trigger 30. The sensor layer 60 comprises agents that may include one or more of a trigger API 72, a remote trigger 70, a manual trigger 68, a rules template 66, a logging API 64, or a log files monitor 62.

As an example, the log files monitor 62 may have a configuration file that includes the paths to error log files of the applications 61 that the log files monitor 62 is monitoring, instructions on how often to run, and a list of error patterns to check for in each error log file. The error patterns may be regular string expressions. If the log files monitor 62 does not have permission to delete error messages from the error log files of the applications 61, the log files monitor 62 may also maintain a record of error messages previously reported, so that the log files monitor 62 does not report the same error message twice. The list of error patterns may be different for each application, and may be determined partly by the registered analysis modules 46 in the vendor system 40. When the log files monitor 62 finds in one of the error log files an error message matching one of the error patterns listed for that error log file, the log files monitor 62 passes the error message to the fault detection service 60. The log files monitor 62 may also pass the error pattern that error message matched, and details about the application 61, such as the application name and version.

The configuration file for the log files monitor 62 may be updated manually when an application 61 is added, removed, or upgraded, or may be updated automatically from time to time. Automatic updates may be generated by the vendor system 40 and downloaded to the client system 24.

The remote trigger 70 enables a diagnostic data set 28 to be generated at the request of an entity remote from the client site 20. For example, if the vendor system 40 is monitoring the operation of the client system 24, the vendor system may use the remote trigger 70 to request a data set 28 at a time when no triggering event has occurred within the client system 24. User personnel 22 may use the manual trigger 68 to generate a data set 28 generally at any time. The logging API 64 or the log files monitor 62 may generate a trigger 30 if specific occurrences are logged, or regularly, for example, when a certain quantity of transactions have been logged.

When the fault detection service 60 receives a trigger 30 in the form of a report from any of the modules 62 to 72, the fault detection service 60 registers the report as a "fault detection" data type, and publishes the report to the coordination engine 52. The actual report may be stored in a database maintained by the coordination engine 52, or the report may be stored in publicly accessible memory elsewhere on the client system 24, with a pointer to the report in a database maintained by the coordination engine 52. The coordination engine 52 includes a continuously running coordination service that detects the newly published reports from the services 60, 74, 86, 100 attached to the coordination engine 52. The configuration files 54 contain a list of available services, and of the data types each of those services is interested in processing. The coordination engine 52 thus determines from the configuration files 54 which service to pass the newly registered report to. Where more than one available service has declared an interest in processing the same data type, the configuration files 54 also specify in what order those services should process the data, or specifies that two or more services may process the same data in parallel.

By way of example, a report of "fault detection" data type, or a specific subtype, may be passed to the data collection service or data collection layer 74 of the framework. The data collection layer 74 comprises data collection programs that may include one or more of operating system data collection 76, application data collection 78, or custom written data collection processes 80. The data collection layer 74 may include the local analysis service 82 and the inventory service 84. The data collection layer 74 may include an agent for collecting data identifying the vendor product or products involved in the diagnosis. The identifying information may include a product or license serial number or other information that directly or indirectly identifies the customer site 20.

The data collection service 74 may select one or more specific data collection program 76, 78, 80 that are appropriate to the specific error message or other data that the coordination engine 52 has passed to the data collection service 74. The data collection service 74 may select a system level collection agent 76 that collects configuration information about the client system 24. This configuration information may be compared with a previous system collection, to assist in determining whether a fault may be related to a recent change in system configuration.

Updated data collection agents 76, 78, and 80 may be downloaded to the client system 24 from the vendor site 40, as may be other agents and services. Customers may be permitted to add or modify data collection agents. However, the vendor system 40 may then verify that the data collected complies with a specified protocol, and may generate an error message if a non-compliant data set 28 is received at the vendor system 40.

A local notification layer 86, which may generate one or more of an external software application fault event 88, an external software application error message 90, and an extensible notification 92, may inform customer personnel 22 that the trigger 30 has been generated and/or that a data set 28 has been generated. The local notification layer 86 may provide additional information such as the nature of the trigger 30, where the framework supports distinct triggers, or the result of any analysis in the local analysis module 82. The local notification layer 86 may communicate with the personnel 22 through a local console 94, which may also be the input point for the manual trigger 68. Local routing devices 96 may transmit commands and data between the sensors 60, the data collection module 74, the local notification module 86, and the local console 94.

Other services available on the local computer system 24 may include the local incident analysis service 82. The local incident analysis service 82 may be part of the data collection service 74, as shown in FIG. 3A, or may be a separate service registered with the coordination engine 52, as shown in FIG. 2. The local incident analysis service 82 may be provided with analysis modules similar to the analysis modules 46 shown in Figure 1. The subscription registry 57 then records what analysis modules 46 are available, and what fault data are of interest to each analysis module 46. The actual analysis modules may be selected so that the local incident analysis service 82 analyses comparatively simple, common faults. Where the local incident analysis service 82 is able to generate a diagnosis or recommendation, the diagnosis or recommendation may be passed to the local notification layer 86 to be communicated to the client personnel 22. Rarer or more complex faults, or faults that the local analysis service 82 is unable to resolve, are passed to the vendor system 40.

Updated local analysis modules 46 may be downloaded or otherwise shipped to the client system 24 from the vendor site 40. When an analysis module 46 is shipped to the client system 24, the analysis module 46 is generally accompanied by a registration instruction set to generate the correct entries in the subscription registry 57, so that the local incident analysis service 82 uses the new analysis module 46 correctly.

The local computer system 24 may also have the incident lifecycle service 98, which controls archiving or disposal of old fault and analysis data. The incident lifecycle service 98 may also control handling of new fault data, for example, by instructing the coordination engine 52 or the other services to ignore certain faults and/or suppress duplicate faults, and/or by controlling which faults are analyzed by the local analysis service 82 and which faults are passed to the vendor system 40.

Other services may be added to the coordination engine 52, and other agents or modules may be added to the services, either by the vendor or by the client personnel 22. For example, at a client site 20 where the client personnel 22 have a high level of expertise, a service may be provided to log faults to a client case management system (not shown), and faults may be passed to the vendor system 40 only after a review by the client personnel 22.

The transport service 100 on the local computer system 24 and the data retrieval service 105 (see FIG. 2) on the vendor system 40 may provide one or more of an HTTP, HTTPS, or SOAP based connection 102 or a two-way connection 104. As mentioned above, the transport layer 100 may comprise an internet connection to a vendor website 41.

Referring now to FIG. 3B, at the vendor system 40 the entitlement service 106 may determine whether the customer is eligible for diagnosis in respect of the diagnostic data set 28. The entitlement service 106 may include one or more of a support agreement agent 108 verifying whether there is a support agreement between the vendor and the customer, or a custom agreement 110 verifying whether there is a specific arrangement such as warranty support or a custom agreement to diagnose a particular problem.

The analysis layer or analysis service 112 includes the coordination unit 44 and the analysis modules 46. The analysis may include one or more of diagnosis 114, configuration assessment 116, patch selection or generation 118, predictive maintenance 120, decision support 121, and license analysis 122. Decision support 121 and license analysis 122 are appropriate when the diagnosis suggests, or is carried out in contemplation of, an expansion or upgrade of the client system 24.

The result 48 of the completed analysis passes to the delivery service 123, which may comprise the publication layer or publication service 127 and the notification layer or notification service 128. The publication service 127 may include publication of the result to one or more of a customer portal 124 such as the website 41, from which the client's personnel 22 can access the result, or an engineer interface 126. The notification service 128, which may include an e-mailer 130 to send a message 50 (FIG. 1) to the client site 20, alerts the client's personnel 22 that the result is accessible and instructs the client's personnel 22 how to access the result. Where the result is specific to the client system 24, the message 50 may contain a password for accessing the result. Where the result is of general application, the result may be included in a publicly-accessible knowledge base.

Alternatively, or in addition, the delivery service 123 may send the result of the analysis directly to the client site 20, where the change and configuration agent 125 (see FIG. 3) performs the appropriate actions, for example, installing a patch or executing a workaround, on basis of the results. Where a patch, upgrade, or other modification to the client system 24 is part of the result, and a large file transfer is required, the publication service 122 may be used, so that the client's personnel 22 can manually download the analysis results and either implement the results manually or invoke the change and configuration agent.

Where only a message, or a script or other small file transfer, is required, a transport module 131 of the delivery service 123, acting similarly to the transport service 100 and the data retrieval service 105 but in the opposite direction, may deliver the result directly to the client site 20.

Where the result 48 generated by the analysis layer 112 is not sufficient, which may be determined by the analysis layer 112 or by the client's personnel 22, the diagnostic data set 28 passes to the escalation service or escalation layer 132. The escalation service 132 may include one or more of a case logging module 134, an escalation assessment module 136, a remote real-time diagnostic examination module 138 of the client system 24 by the vendor's personnel, a live discussion 140 between vendor's support personnel and client's personnel 22, or an interactive trouble-shooting module 142.

The case logging module 134 may automatically generate a log entry in the vendor 40's workflow management system. The escalation assessment module 136 may assess how urgent and how critical the problem is, and may influence the log entry generated by the case-logging module 134. The escalation assessment module 136 and the case logging module 134 may assign the case to a specific support person or to a general queue, and may in critically urgent cases generate an e-mail, pager, or other alert to request immediate attention. The remote real-time diagnostic examination module 138 or the interactive trouble-shooting module 142 may set up a connection enabling the vendor's personnel and/or the analysis service 112 to obtain additional information from the client system 24. These modules 138 and 142 may communicate directly with the client system 24 through the client services coordination engine 52, or may communicate with or through client personnel 22. The interactive trouble-shooting module 142 may include questioning the client personnel 22 and/or instructing the client personnel 22 to perform actions on the client system 24 that can be monitored by the data collection service 74.

The incident lifecycle service 166, similar to the client incident lifecycle service 98, may allow the vendor system 40 to ignore certain current faults, bypass certain other services for certain faults, and/or may handle archiving and disposal of old fault records.

The reporting service 168 provides the vendor with reports on the faults analyzed by the system 40, and on whether, and if so how, they have been resolved.

In each of the local computer system 24 and the vendor system 40 shown in FIGS. 2, 3A, and 3B, the client services coordination engine 52, 152 is typically configured to use certain default services, for example, the services 60, 74, 86, 100, and each service is configured to invoke at least one agent, for example, the agents 108, 110 for the entitlement service 106. When the framework for the support system is initially installed on the client computer system 24 or the vendor system 40, some of the default services may have no active agents. A default service with no active agents may then be provided with a default agent that returns a message enabling a data set 28 to be passed on to a predetermined next service. For example, if the entitlement service 106 is not active, neither a support contract agent 108 nor a custom support agent 110 may be present. The entitlement service 106 may then be provided with a default agent that, whenever a data set 28 is passed to the default agent by the entitlement service 106, returns to the coordination engine 152 a message indicating that the data set 28 is eligible for analysis. When an active agent is installed in a service, the service may disable the default agent, or may set the default agent to be invoked only when a message or data type is received from the server services coordination engine 152 for which no active agent is applicable.

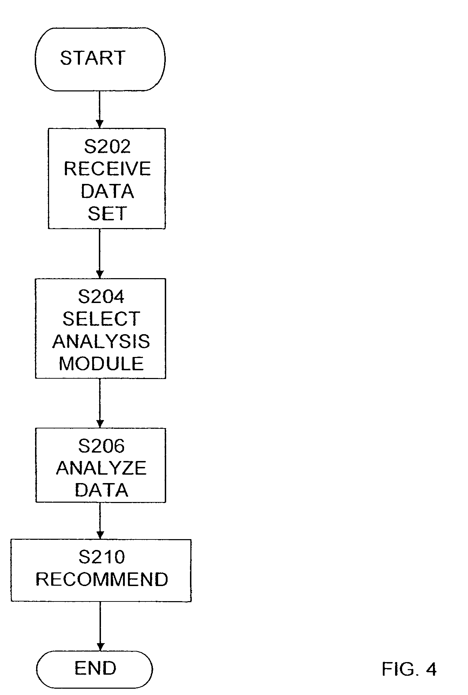

Referring now to FIG. 4, in one embodiment of a method of servicing a client computer system 24 according to the present invention, in step S202 the coordination engine 52 passes a diagnostic data set 28 to the coordination unit 44 of the analysis layer 112. In step S204, one or more analysis modules 46 are selected to analyze data in the data set 28. In step S206, the one or more analysis modules 46 analyze the data. In step S210, the coordination unit 44 then generates a recommendation based on the analysis results, alone or in combination with the original diagnostic data set 28, which the coordination engine 52 passes on to a next service.

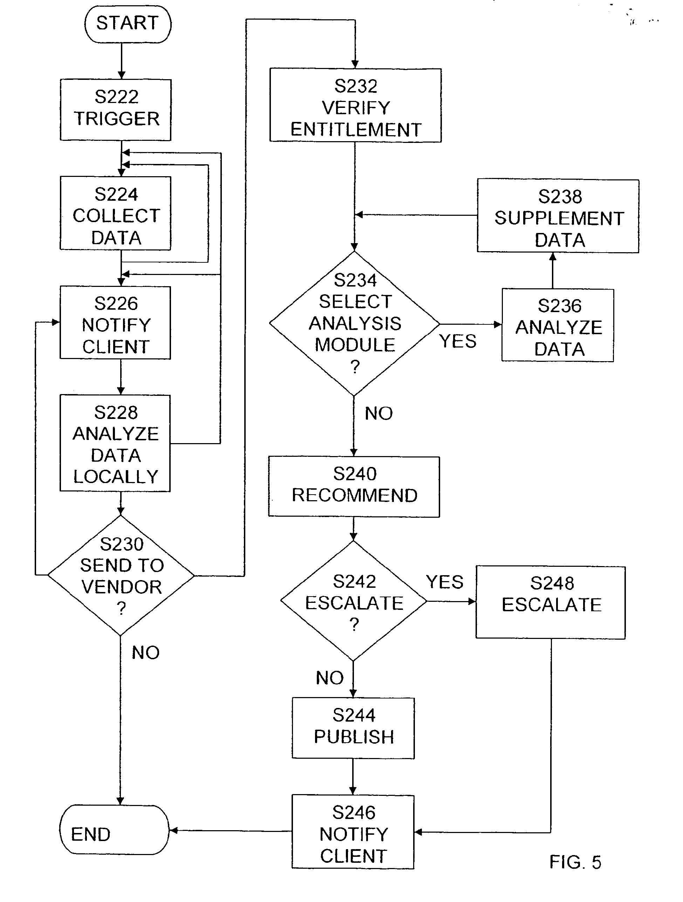

Referring now to FIG. 5, in a further embodiment of a method of servicing a client computer system 24 according to the present invention, in step S222 a trigger event is detected by a sensor 60 at the client computer system 24, and generates a trigger 30. The coordination module 52 passes the trigger 30 to the data collection module 74. In response to the trigger 30, in step S224, data is collected in data collection module 74 to form a diagnostic data set 28, and in step S226 the client personnel 22 are notified, for example, by way of local console 94. As shown symbolically in Figure 5, the collection of data may be a multi-stage process with repeated loops through the data collection step S224.

In step S228, the data set 28 may be passed to and analyzed locally by a local analysis module 82, and depending on the results of the local analysis the coordination engine 52 may pass the process back to the data collection service 74, and the process may return to step S224 to collect further data. The process may return to step S226 to generate further notifications to client personnel 22 at any appropriate stage.

In step S230, it is decided whether the analysis data set 28 is to be sent to the vendor system 40 for analysis. The decision may depend on the results of the local analysis. For example, the local analysis may have solved whatever problem is under consideration, so that analysis by the vendor is unnecessary, or the client personnel 22 may deny permission for the analysis data set 28 to be forwarded to the vendor system 40. The fault may be one that the incident lifecycle service 98 specifies should be forwarded to the vendor system 40, or should not be forwarded to the vendor system 40. The decision may be notified to the client personnel 22.

When the analysis data set 28 is forwarded to the vendor system 40, in step S232 the entitlement module 106 verifies that the data set 28 is a valid diagnostic data set and is eligible for analysis. If restrictions are to be imposed on the analysis to be carried out because of the identity of the client site 20, the identity of the client system 24, or the relationship between the client system 24 and the vendor system 40, such restrictions may be determined in step S232 and forwarded along with the data set 28 for use in subsequent steps. As discussed above, the data set 28 is forwarded from each relevant service to the next by the coordination engine 152.

In step S234, the coordination unit 44 of the analysis layer 112 receives the diagnostic data set 28, and one or more analysis modules 46 of the analysis layer are selected to analyze data in the data set 28 by a comparison of the data set with criteria established for selection of each available analysis module. In step S236, the one or more selected analysis modules 46 analyze the data, and in step S238 the original data set 28 is supplemented with results from the analysis. The process then returns to step S234, where one or more further analysis modules may be selected. In an embodiment, the criteria established for selection of some analysis modules 46 may include the fact that results are available from other modules, or that other modules have returned specific results.

The loop through steps S234, S236, and S238 may be repeated until all analysis modules applicable to the diagnostic data set 28 have been applied, or until it is otherwise determined that the analysis is complete, or until the analysis is otherwise terminated. When it is determined in step S234 that further analysis is not appropriate, the process proceeds to step S240 to generate a recommendation based on the data set 28 and the result of the analysis in step S236. At step S242, it may be decided whether or not there is a problem that merits escalation to layer 132. This determination may be based on the results of the analysis and/or the entitlements determined in step S232. In step S244, the recommendation generated in step S240 is made available by the publication service 127, and in step S242 the notification service 128 informs the client 20 how to access the recommendation. Where escalation is chosen in step S242, step S244 may be omitted. Escalation is then initiated in step S248, and the notification in step S246 may consist of a communication initiating the communication between the vendor system 40 and the client 20 that is necessary for escalation.

Various modifications and variation can be made in the present invention without departing from the spirit or scope of the invention. For example, although in the described embodiments the party responsible for system 40 is referred to as the "vendor," the systems and methods described are not limited to situations where a vendor-purchaser relationship exists. The system 40 may be a system that provides the desired support and analysis functions for a "client" system 24, and the system 40 may be operated by the same entity that operates the client system 24.

As described above, the coordination engines 52, 152 use databases such as the subscription registries 57, 162 and the configuration files 54, 156 to determine what messages and data sets 28 to pass to which services. The various services use databases of the available agents to determine what messages and data sets 28 to pass to which agents. Depending on the particular system, such information may be more or less divided into multiple databases or consolidated into fewer databases. The coordination engines 52, 152 may to a greater or lesser extent be able to see specific agents in at least some of the attached services, and to route messages and data sets 28 directly to specific agents in at least some of the attached services. The coordination engines 52, 152 may then be able to enable simultaneous processing of a data set 28 by agents or modules in different services, where other agents in the same services are not permitted to process similar data simultaneously.

Although FIG. 2 shows the client services 60, 74, 86, 100 coordinated by a coordination engine 52 within the client system 24, where the web services interface 58 or other service oriented interface layer uses a standard communication system such as HTTP, HTTPS, or similar, the client coordination engine 52 may be physically remote from the specific client computer system 24 on which the client services 60, 74, 86, 100 are active. For example, the client coordination engine 52 may be on another system within the client site 20, may be at the vendor site 40, or may be on a third computer system elsewhere.

Thus, it is intended that the present invention cover the modifications and variations of this invention provided they come within the scope of the appended claims and their equivalents.

## Claims

1. A framework for an automated computer support system, comprising:
a coordination engine (152);
services comprising a data retrieval service (105) for receiving a diagnostic data set (28) from a client computer (24), and an analysis service (112) for analyzing said diagnostic data set (28) and generating a recommendation using the results of said analyzing; and
functional modules executable by said services;
wherein said modules include a plurality of analysis modules (46, 114) for analyzing said diagnostic data set (28); and
wherein said coordination engine (152) is arranged to receive data from said functional modules, select modules on the basis of said diagnostic data set (28), and pass data to said selected modules.

2. A framework according to claim 1, wherein said services (106, 112, 123, 132) are registered with said coordination engine (152), wherein registering includes specifying to said coordination engine (152) a description of diagnostic data sets (28) that a respective functional module will process, and said coordination engine is arranged to pass a data set only to one or more modules that will process the data set.

3. A framework according to claim 1 or claim 2, wherein said services further comprise a delivery service (123) for making said recommendation available to a user (22) of said client computer (24).

4. A framework according to claim 3, wherein said delivery service (123) is arranged to send (128) said recommendation to said user.

5. A framework according to claim 3 or claim 4, wherein said delivery service (123) comprises a publication module (127) arranged to make said recommendation accessible to said user and a notification module (128) arranged to notify said user that said recommendation is accessible.

6. A framework according to any of claims 1 to 5, wherein said coordination engine (152) permits functional modules to review said diagnostic data sets (128) and to select themselves to process diagnostic data sets.

7. A framework according to any of claims 1 to 6, wherein at least one functional module is selected only when the diagnostic data set (28) is supplemented with data from another functional module

8. A framework according to any of claims 1 to 7, wherein at least one functional module is selected only when the diagnostic data set (28) is supplemented with specific data from another functional module.

9. A framework for a client for an automated computer support system according to any of claims 1 to 8, comprising:
a coordination engine (52);
client services comprising a data collection service (74) having a data collection module (76, 78, 80) for collecting data to form a diagnostic data set (128) in response to a trigger (30), and a transport service (100) having a transport module (102, 104) for passing said data set (28) to a data retrieval service (105) of a server system (40); and
functional modules executable by said services (60, 74, 86, 100);
wherein said coordination engine (52) is arranged to receive data from said functional modules, to select modules on the basis of said diagnostic data set (28), and to pass data to said selected modules.

10. A framework for a client according to claim 9, wherein said client services comprise an analysis service (82) for analyzing said diagnostic data set (28) and for generating a recommendation using the results of said analyzing.

11. A framework according to claim 9 or claim 10, wherein said client services comprise at least one service selected from the group consisting of a fault detection service (60) for generating said trigger (30), a software inventory service (84), an incident lifecycle service (98), a notification service (86) for communicating said recommendation to a user (22) associated with said client computer (24), and a change and configuration agent (125) arranged to implement a recommendation received from said server.

12. A framework according to any of claims 9 to 11, wherein said registering includes specifying to said coordination engine (52) a description of diagnostic data sets (28) that a respective functional module will process, and said coordination engine (52) is arranged to pass a data set (28) only to one or more modules that will process the data set.

13. A framework according to any of claims 9 to 12, wherein said data collection service (74) comprises modules (76, 78, 80) that collect first diagnostic data, collect second diagnostic data in response to said first diagnostic data, and generate said diagnostic data set (28) using said first and said second diagnostic data.

14. A method of servicing a client computer comprising:
receiving (5202) a diagnostic data set (28) from said client computer (24) by an agent of a data retrieval service (105);
selecting (5204, 5234) at least one analysis agent (46, 114) from a plurality of analysis modules of an analysis service (112) on the basis of said diagnostic data set (28);
analyzing (5206, 5236) said diagnostic data set (28) by said at least one selected analysis agent (46, 114);
generating (5210, 5240) a recommendation using the results of said analyzing by an agent of said analysis service (112); and
passing data between said services (105, 112) by a coordination engine (152)

15. A method according to claim 14, wherein said services (105, 106, 112, 123, 132, 166, 168) register data and messages with said coordination engine (152) under specified data types, and said coordination engine (152) passes said data and messages to other said services in dependence on said registered data types.

16. A method according to claim 14 or claim 15, wherein said agents register with their associated services (105, 106, 112, 123, 132, 166, 168) information specifying data and messages to be processed by said agents.

17. A method according to any of claims 14 to 16, comprising registering said services with said coordination engine (152), wherein said registering includes specifying to said coordination engine (152) a description of data sets that the registered service will process

18. A method according to any of claims 14 to 17, comprising passing said recommendation by said coordination engine (152) to a delivery service (123), and providing said recommendation to said client computer by said delivery service (123).

19. A method according to claim 18, wherein providing said recommendation to said client computer comprises making said recommendation available at a publishing module of said delivery service, notifying a user of said client computer by a notification module of said delivery service that said recommendation is available, and permitting said user to retrieve said recommendation from said publishing module.

20. A method according to any of claims 14 to 19, comprising:
registering with a services coordination engine (52) of said client computer services comprising a fault detection service (60), a data collection service (74), and a transport service (100);
registering with said services functional agents for said services;
producing (5222) at said client computer (24) a trigger (30) by a said agent (62, 64, 66, 68, 70, 72) of said fault detection service;
generating (5224) at said client computer (24) a diagnostic data set (28) by a said agent (76, 78, 80, 82, 84) of said data collection service (74) in response to said trigger;
forwarding (5230) said diagnostic data set (28) to said agent of said date retrieval service (108) by a said agent (102, 104) of said transport service (100); and
passing data between said services by said services coordination engine (52).
